# EUROPÄISCHE PATENTSCHRIFT

(11) **EP 3 420 229 B1**
(45) Veröffentlichungstag und Bekanntmachung des Hinweises auf die Patenterteilung: **24.05.2023**
(21) Anmeldenummer: 17701858.7
(22) Anmeldetag: 26.01.2017
(51) Int. Cl.: F03D 80/80, F03D 1/06, F03D 80/50

(54) **TEILBARES PITCHROHR**
SPLIT PITCH TUBE
TUBE DE TRAVERSÉE SCINDABLE

(30) Priorität: 23.02.2016 DE 102016202735
(43) Veröffentlichungstag der Anmeldung: 02.01.2019
(73) Patentinhaber: ZF Friedrichshafen AG, 88046 Friedrichshafen (DE); ZF Wind Power Antwerpen NV, 3920 Lommel (BE)
(72) Erfinder: FISCHER, Steffen, 59394 Nordkirchen (DE); STRASSER, Dirk, 58339 Breckerfeld (DE)
(74) Vertreter: ZF Friedrichshafen AG
(86) Internationale Anmeldenummer: PCT/EP2017/051618
(87) Internationale Veröffentlichungsnummer: WO 2017/144225

(56) Entgegenhaltungen:
- EP-A1- 2 080 904
- EP-A1- 3 001 070
- EP-A2- 2 597 307
- DE-A1- 4 035 684
- DE-A1-102011 117 901
- US-A- 4 548 431

## Beschreibung

Die Erfindung betrifft ein Pitchrohr nach Anspruch1.

Um bei Windkraftanlagen eine Blatteinstellwinkelregelung (Pitchregelung) vornehmen zu können, sind elektrische Leitungen erforderlich, die zwischen dem Rotor und einem generatorseitigen Anschluss verlaufen. Zur Aufnahme dieser Leitungen dient gewöhnlich ein sogenanntes Pitchrohr.

Die Montage und Demontage eines Pitchrohres erfordert, dass in der Triebwerksgondel ausreichend freier Raum vorhanden ist. Entsprechend dimensionierte Triebwerksgondeln sind entweder nicht realisierbar oder sehr kostenintensiv. Zudem ist die Handhabung eines langen Pitchrohres problematisch.

Die Druckschriften EP 2 597 307 A3 und US 2010/007 151 A2 offenbaren ein doppelwandiges Pitchrohr mit einem äußeren und einem inneren Rohr. Der zwischen dem inneren und dem äußeren Rohr gebildete Hohlraum dient dabei der Zuführung von Schmierstoff. Die elektrischen Leitungen verlaufen durch das innere Rohr. Eine radiale Unterteilung des Pitchrohrs ist nicht vorgesehen.

Die Druckschrift DE10 2011 117 901 offenbart ein Pitchrohr gemäß dem Oberbegriff des Anspruchs 1.

Der Erfindung liegt die Aufgabe zugrunde, ein verbessertes Pitchrohr verfügbar zu machen, das die Nachteile der aus dem Stand der Technik bekannten Lösungen nicht aufweist. Insbesondere soll das Pitchrohr leicht handhabbar sein und die Montage und Demontage von Getrieben, insbesondere derer von Windkraftgetrieben, vereinfachen.

Unter einem Pitchrohr ist ein Rohr, d.h. ein zumeist länglicher Hohlkörper mit genau zwei Öffnungen bzw. Mündungen, einer Windkraftanlage zu verstehen, das mindestens teilweise durch eine hohle Rotorwelle der Windkraftanlage verläuft. Mindestens ein Teil eines von der Rotorwelle umgebenen Hohlraums befindet sich also zwischen den beiden Mündungen des Pitchrohrs. Die Rotorwelle verbindet einen Rotor, aufweisend eine Rotornabe und vom Wind angetriebene Rotorblätter, drehfest mit einer Eingangswelle eines Getriebes oder eines Generators. Dies bedingt, dass das Pitchrohr auch durch Getriebe bzw. den Generator, insbesondere durch dessen Eingangswelle verläuft. Im Einzelfall können die Rotorwelle und die Eingangswelle des Getriebes einstückig miteinander verbunden sein.

Ein Pitchrohr dient zur Durchführung von Signalleitungen, Leitungen zur Energieversorgung und/oder Schmierstoffleitungen. Es verläuft koaxial zu der Drehachse der Rotorwelle beziehungsweise des Rotors. Insbesondere verläuft die Drehachse durch die beiden Mündungen des Pitchrohrs. Vorzugsweise ist Pitchrohr rotationssymmetrisch, mit einer Symmetrieachse, die identisch ist mit der Drehachse der Rotorwelle beziehungsweise des Rotors.

Das erfindungsgemäße Pitchrohr ist zweistückig ausgeführt. Es umfasst ein erstes Rohrstück und ein zweites Rohrstück. Bei den beiden Rohrstücken handelt es sich um physisch getrennt voneinander ausgeführte Stücke.

Das Pitchrohr weist genau zwei Mündungen auf. Das erste Rohrstück bildet eine erste der beiden Mündungen aus, das zweite eine zweite Mündung.

Erfindungsgemäß sind das erste Rohrstück und das zweite Rohrstück lösbar miteinander verbunden. Die beiden Rohrstücke lassen sich somit getrennt voneinander in ein Getriebe einsetzen bzw. aus dem Getriebe entnehmen. Dies vereinfacht nicht nur die Montage und Demontage des Pitchrohrs, sondern darüber hinaus auch die Montage und Demontage des Getriebes unter beengten Platzverhältnissen, etwa in einer Triebwerksgondel einer Windkraftanlage.

Die erfindungsgemäße Verbindung fixiert das erste Rohrstück und das zweite Rohrstück relativ zueinander mindestens gegenüber einer axialen Verschiebung, d.h. einer Verschiebung entlang der oben genannten Drehachse. Darüber hinaus erfolgt vorzugsweise eine Fixierung des ersten Rohrstücks und des zweiten Rohrstücks relativ zueinander gegenüber radialen Verschiebungen, d.h. Verschiebungen in eine beliebige Richtung orthogonal zu der Drehachse.

In einer bevorzugten Weiterbildung sind ein erster Bereich des ersten Rohrstücks und ein erster Bereich des zweiten Rohrstücks axial versetzt zueinander angeordnet. Insbesondere besteht zwischen dem ersten Bereich des ersten Rohrstücks und dem ersten Bereich des zweiten Rohrstücks keine radiale Überlappung. Der erste Bereich des ersten Rohrstücks und der erste Bereich des zweiten Rohrstücks befinden sich auf unterschiedlichen Seiten einer radial, d.h. orthogonal zu einer Achse verlaufenden Ebene. Bei der Achse handelt es sich um die Drehachse der Rotorwelle eines Windkraftgetriebes, in dem das Pitchrohr enthalten ist.

Ein zweiter Bereich des ersten Rohrstücks und ein zweiter Bereich des zweiten Rohrstücks sind bevorzugt lösbar miteinander verbunden. Der zweite Bereich des ersten Rohrstücks bzw. des zweiten Rohrstücks sind jeweils von den oben genannten ersten Bereichen verschieden. Zwischen den ersten Bereichen des ersten Rohstücks bzw. des zweiten Rohrstücks und dem zweiten Bereich des ersten Rohstücks bzw. des zweiten Rohrstücks bestehen keine radialen Überlappungen. Radial überlappen können sich hingegen der zweite Bereiche des ersten Rohrstücks und der zweite Bereich des zweiten Rohrstücks.

In einer darüber hinaus bevorzugten Weiterbildung sind das erste Rohrstück und das zweite Rohrstück bzw. der zweite Bereich des ersten Rohstücks und der zweite Bereich des zweiten Rohrstücks miteinander verschraubt. Dabei bildet das erste Rohrstück bzw. der zweite Bereich des ersten Rohrstücks ein erstes Gewinde aus, das zweite Rohrstück bzw. der zweite Bereich des zweiten Rohrstücks ein zweites Gewinde. Das erste Gewinde und das zweite Gewinde sind miteinander verschraubt.

Bevorzugt sind das erste Gewinde und das zweite Gewinde axial ausgerichtet. Dies bedeutet, dass eine Gewindeachse, d.h. eine Achse, um die mindestens ein Gewindegang des Gewindes gewickelt ist, parallel zu der oben genannten Drehachse der Rotorwelle verläuft oder mit dieser identisch ist.

Erfindungsgemäß sind das erste Rohrstück und das zweite Rohrstück jeweils mit einer ersten Stützfläche ausgebildet.

Die erste Stützfläche des ersten Rohrstücks und die erste Stützfläche des zweiten Rohrstücks stützen sich gegeneinander mindestens in mindestens eine radiale Richtung ab. Somit dienen die ersten Stützflächen zur Abstützung des ersten Rohrstücks und des zweiten Rohrstücks gegeneinander mindestens in mindestens eine radiale Richtung.

Eine Abstützung mindestens in eine radiale Richtung bedeutet, dass ein von Null verschiedener Richtungsvektor einer durch die Abstützung aufgebrachten Kraft in radialer Richtung, d.h. orthogonal zu der oben genannten Drehachse verläuft. Vorzugsweise findet die Abstützung mindestens in jede radiale Richtung statt.

Darüber hinaus bilden das erste Rohrstück und das zweite Rohrstück erfindungsgemäß jeweils eine zweite Stützfläche aus. Auch die zweiten Stützflächen stützen sich gegeneinander mindestens in mindestens eine radiale Richtung ab. Obige Ausführungen zu den ersten Stützflächen gelten Mutatis Mutandis auch für die zweiten Stützflächen. Erfindungsgemäß sind die ersten Stützflächen und/oder die zweiten Stützflächen rotationssymmetrisch zu der oben genannten Drehachse.

Der oben genannte zweite Bereich des ersten Rohrstücks ist in einer bevorzugten Weiterbildung axial zwischen der ersten Stützfläche und der zweiten Stützfläche des ersten Rohrstücks angeordnet. Weiterhin ist der zweite Bereich des zweiten Rohrstücks bevorzugt axial zwischen der ersten Stützfläche und der zweiten Stützfläche des zweiten Rohrstücks angeordnet.

Die Anordnung eines ersten Objekts axial zwischen einem zweiten Objekt und einem dritten Objekt bedeutet allgemein, dass das erste Objekt und das zweite Objekt sich auf unterschiedlichen Seiten einer radial, d.h. orthogonal zu einer Referenzachse verlaufenden ersten Ebene befinden. Auf der gleichen Seite dieser Ebene wie das erste Objekt befindet sich das dritte Objekt. Weiterhin befinden sich das erste Objekt und das dritte Objekt auf unterschiedlichen Seiten einer zweiten radial, d.h. orthogonal zu der Referenzachse verlaufenden zweiten Ebene. Auf der gleichen Seite dieser Ebene wie das erste Objekt befindet sich das zweite Objekt. Insbesondere befinden sich also das zweite Objekt und das dritte Objekt auf unterschiedlichen Seiten der ersten Ebene; das zweite Objekt und das dritte Objekt befinden sich auf unterschiedlichen Seiten der zweiten Ebene.

Weiterbildungsgemäß stellt die oben genannte Drehachse die Referenzachse dar. Durch die weiterbildungsgemäße Anordnung der zweiten Bereiche des ersten Rohrstücks und des zweiten Rohrstücks zwischen den Stützflächen wird zusammen mit der erfindungsgemäßen Verbindung des ersten Rohrstücks und des zweiten Rohrstücks eine starre Fixierung des ersten Rohrstücks und des zweiten Rohrstücks erreicht. Die Fixierung wirkt also jeglichen translatorischen oder rotatorischen Relativbewegungen des ersten Rohrstücks und des zweiten Rohrstücks entgegen.

In einer darüber hinaus bevorzugten Weiterbildung sind die ersten Stützflächen und/oder die zweiten Stützflächen zylindrisch oder kegelig ausgeformt. Dies bedeutet, dass die Stützflächen eine innere oder äußere Mantelfläche eines Zylinders oder Kegels bilden. Als besonders vorteilhaft erwiesen haben sich kegelige Stützflächen, da diese das erste Rohrstück und das zweite Rohrstück bei der Montage zentrieren. Dies ermöglicht es, das erste Rohrstück bzw. das zweite Rohrstück im Inneren eines Getriebes "blind" miteinander zu verfügen. Im Falle kegeliger Stützflächen übt die erfindungsgemäße Verbindung des ersten Rohrstücks mit dem zweiten Rohrstück vorzugsweise eine Kraft in axialer Richtung aus, die zu einer axialen Verspannung des ersten Rohrstücks und des zweiten Rohrstücks in den Stützflächen führt.

Das oben beschriebene erste Rohrstück ist erfindungsgemäß ausgebildet, mit dem oben beschriebenen zweiten Rohrstück zu dem oben beschriebenen Pitchrohr verbunden zu werden.

Vorzugsweise ist das Pitchrohr in einem Getriebe, etwa einem Getriebe einer Windkraftanlage enthalten. Dabei ist das erste Rohrstück lösbar, etwa durch Verschraubung, mit einer Eingangswelle dieses Getriebes verbunden. Dies hat den Vorteil, dass nicht nur das zweite Rohrstück von dem ersten Rohrstück gelöst werden kann, sondern auch das erste Rohrstück von der Eingangswelle. Zur Erleichterung der Demontage kann somit auch das erste Rohrstück in dem Getriebe verschoben werden.

Bevorzugte Ausführungsbeispiele sind in den Figuren dargestellt. Übereinstimmende Bezugsziffern kennzeichnen dabei gleiche oder funktionsgleiche Merkmale. Im Einzelnen zeigt:
Fig. 1 ein aus dem Stand der Technik bekanntes Pitchrohr;
Fig. 2 ein teilbares Pitchrohr;
Fig. 3 den Raumbedarf eines geteilten Pitchrohres; und
Fig. 4 den Raumbedarf eines geteilten, verschiebbaren Pitchrohres.

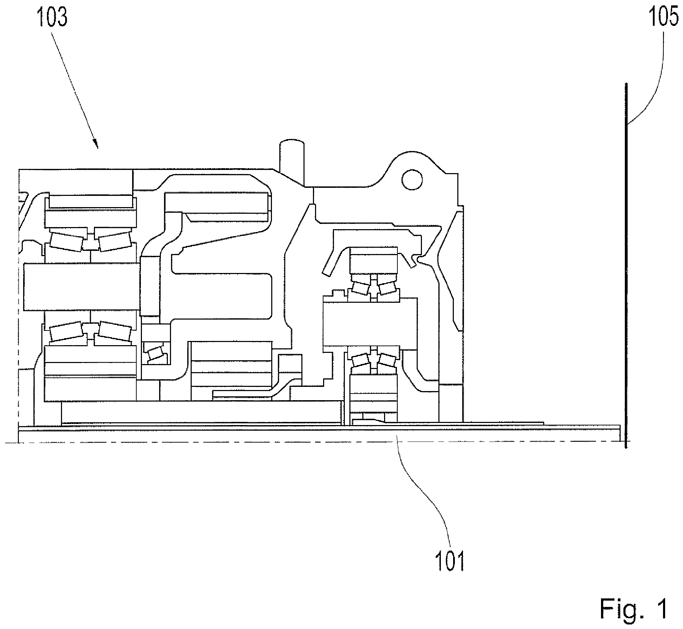

Gemäß Fig. 1 verläuft ein Pitchrohr 101 axial durch ein Getriebe 103. Der - aus der Perspektive von Fig. 1 gesehen - rechts des Getriebes 103 befindliche freie Raum dient der Aufnahme eines Generators. Daher ist das Pitchrohr 103 - aus der Perspektive von Fig. 1 gesehen - nach rechts zur Seite hin entsprechend verlängert.

Dargestellt ist in Fig. 1 weiterhin eine Trennlinie 105. Um den Generator mit dem Getriebe 103 zu verfügen oder den Generator zu demontieren, muss der Generator in axialer Richtung - aus der Perspektive von Fig. 1 gesehen - nach rechts über die Trennlinie 105 hinaus verschoben werden.

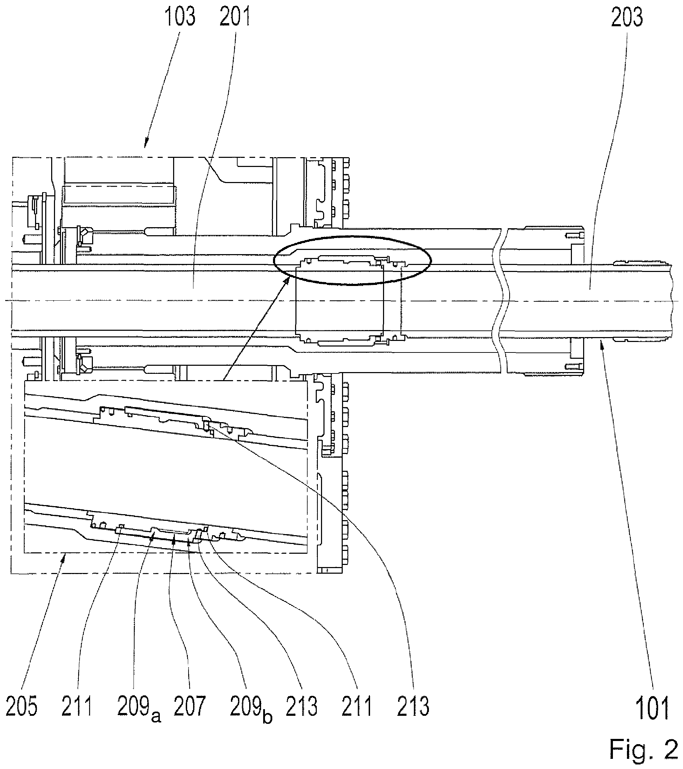

Gegenüber dem einstückig ausgeführten Pitchrohr 101 aus Fig. 1 ist das in den Figuren 2 bis 4 dargestellte Pitchrohr 101 zweistückig, bestehend aus einem ersten Rohrstück 201 und einem zweiten Rohrstück 203, ausgeführt.

Das erste Rohrstück 201 und das zweite Rohrstück 203 sind miteinander verschraubt. Dies ist in der Detailzeichnung 205 näher dargestellt. So bildet ein Gewinde des ersten Rohrstücks 201 mit einem Gewinde des zweiten Rohrstücks 203 eine Verschraubung 207 aus. Das Gewinde des ersten Rohrstücks 201 ist als Innengewinde ausgeführt, das Gewinde des zweiten Rohrstücks 203 als Außengewinde. In axialer Richtung - aus der Perspektive von Fig. 2 aus gesehen - rechts und links der Verschraubung 207 stützen sich das erste Rohrstück 201 und das zweite Rohrstück 203 entlang konischer Flächen 209a, 209b in axialer Richtung aneinander ab. Dabei bilden jeweils eine konische Fläche 209a, 209b des ersten Rohrstücks 201 und eine konische Fläche 209a, 209b des zweiten Rohrstücks 203 ein Wirkflächenpaar zur Übertragung von Stützkräften zwischen dem ersten Rohrstück 201 und dem zweiten Rohrstück 203.

Die konische Form der Flächen 209a, 209b ermöglicht es, das erste Rohrstück 201 und das zweite Rohrstück 203 "blind", d.h. ohne Kontrolle der Positionen der beiden Rohrstücke 201, 203 in das Getriebe 103 einzuführen und miteinander zu verschrauben. Die konische Form der Flächen 209a, 209b sorgt dabei für eine Zentrierung der Rohrstücke 201, 203.

In der Detailzeichnung 205 weiterhin dargestellt sind Dichtringe 211, die im Bereich einer Überlappung zwischen dem ersten Rohrstück 201 und dem zweiten Rohrstück 203 in axialer Richtung möglichst weit nach außen hin positioniert sind. Die Dichtringe 211 dichten das Innere des Pitchrohrs 101 gegenüber in dem Getriebe 103 befindlichem Schmierstoff ab. In das zweite Rohrstück 203 sind Madenschrauben 213 eingebracht, welche die Verschraubung 207 gegen Lösen sichern.

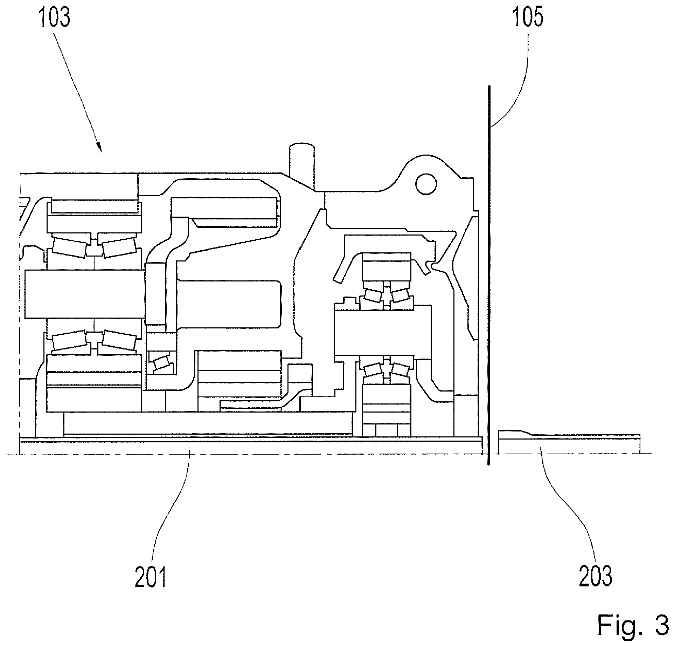

Durch die zweistückige Ausführung des Pitchrohrs 201 verschiebt sich die Trennlinie 105 wie in Fig. 3 dargestellt, nach links in Richtung des Getriebes 103. Infolgedessen verringert sich der Platzbedarf für die Montage und Demontage.

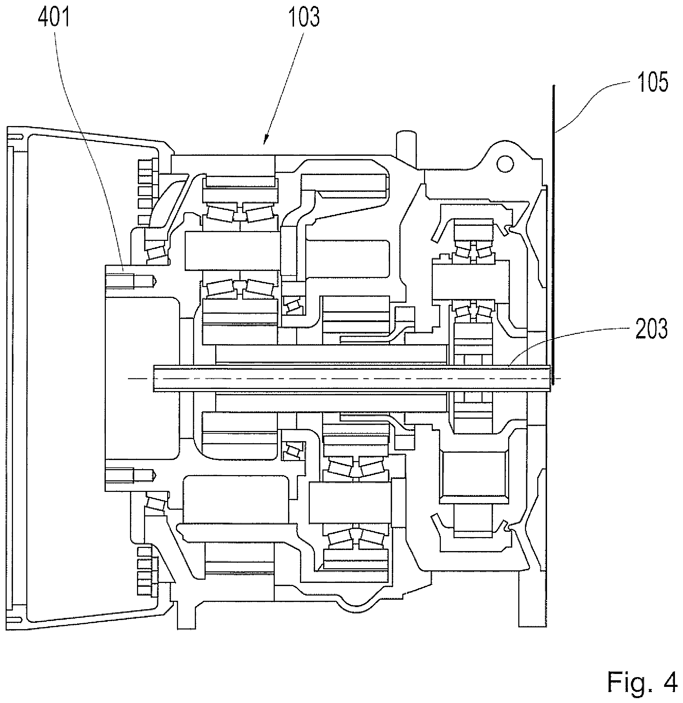

Eine weitere Verringerung des Platzbedarfs resultiert aus einer lösbaren Fixierung des zweiten Rohrstücks 203 in einer angetriebenen Hohlwelle 401 des Getriebes 103. Dies ist in Fig. 4 dargestellt. Die lösbare Fixierung ermöglicht es, dass zweite Rohrstück 203 - aus der Perspektive von Fig. 4 - nach links bzw. rotorseitig zu verschieben. Hierdurch verlagert sich die Trennlinie 105 weiter in Richtung des Getriebes 103, sodass der Generator ohne axiale Verschiebung montiert oder demontiert werden kann.

### Bezugszeichen

- 101: Pitchrohr
- 103: Getriebe
- 105: Trennlinie
- 201: erstes Rohrstück
- 203: zweites Rohrstück
- 205: Detailzeichnung
- 207: Verschraubung
- 209a: konische Fläche
- 209b: konische Fläche
- 211: Dichtring
- 213: Madenschraube
- 401: Hohlwelle

## Patentansprüche

1. Pitchrohr (101) mit einem ersten Rohrstück (201) und einem zweiten Rohrstück (203); wobei
das Pitchrohr (101) genau zwei Mündungen aufweist; wobei
das erste Rohrstück (201) und das zweite Rohrstück (203) jeweils eine der Mündungen ausbilden; wobei
das erste Rohrstück (201) und das zweite Rohrstück (203) lösbar miteinander verbunden sind; **dadurch gekennzeichnet, dass**
das erste Rohrstück (201) und das zweite Rohrstück (203) jeweils eine erste, rotationssymmetrische Stützfläche (209a) ausbilden; wobei
die ersten Stützflächen (209a) sich gegeneinander mindestens in mindestens eine radiale Richtung abstützen.
das erste Rohrstück (201) und das zweite Rohrstück (203) jeweils eine zweite, zu rotationssymmetrische Stützfläche (209b) ausbilden; wobei
die zweiten Stützflächen (209b) sich gegeneinander mindestens teilweise in mindestens eine radiale Richtung abstützen.

2. Pitchrohr (101) nach Anspruch 1; **dadurch gekennzeichnet, dass**
ein erster Bereich des ersten Rohrstücks (201) und ein erster Bereich des zweiten Rohrstücks (203) axial versetzt zueinander angeordnet sind.

3. Pitchrohr (101) nach dem vorhergehenden Anspruch; **dadurch gekennzeichnet, dass**
ein zweiter Bereich des ersten Rohrstücks (201) und ein zweiter Bereich des zweiten Rohrstücks (203) lösbar miteinander verbunden sind.

4. Pitchrohr (101) nach einem der vorhergehenden Ansprüche; **dadurch gekennzeichnet, dass**
das erste Rohrstück (201) und das zweite Rohrstück (203) miteinander verschraubt sind.

5. Pitchrohr (101) nach dem vorhergehenden Anspruch; **dadurch gekennzeichnet, dass**
das erste Rohrstück (201) ein erstes Gewinde ausbildet; wobei
das zweite Rohrstück (203) ein zweites Gewinde () ausbildet; wobei
das erste Gewinde und das zweite Gewinde miteinander verschraubt sind.

6. Pitchrohr (101) nach dem vorhergehenden Anspruch; **dadurch gekennzeichnet, dass**
das erste Gewinde und das zweite Gewinde axial ausgerichtet sind.

7. Pitchrohr (101) nach Anspruch 3; **dadurch gekennzeichnet, dass**
der zweite Bereich des ersten Rohrstücks (201) axial zwischen der ersten Stütz-fläche (209a) und der zweiten Stützfläche (209b) des ersten Rohrstücks (201) angeordnet ist; wobei
der zweite Bereich des zweiten Rohrstücks (203) axial zwischen der ersten Stützfläche (209a) und der zweiten Stützfläche (209b) des zweiten Rohrstücks (203) angeordnet ist.

8. Pitchrohr (101) nach dem vorhergehenden Anspruch; **dadurch gekennzeichnet, dass**
die ersten Stützflächen (209a) und/oder die zweiten Stützflächen (209b) zylindrisch oder kegelig ausgeformt sind.

9. 44) .. Getriebe mit einem Pitchrohr (101) nach einem der Ansprüche 1 bis 8; **dadurch gekennzeichnet, dass**
das erste Rohrstück (201) lösbar mit einer Eingangswelle (401) des Getriebes verbunden ist.

## Claims

1. Pitch tube (101) having a first tube piece (201) and having a second tube piece (203); wherein
the pitch tube (101) has exactly two openings; wherein
the first tube piece (201) and the second tube piece (203) each form one of the mouths; wherein
the first tube piece (201) and the second tube piece (203) are releasably connected to one another; **characterized in that**
the first tube piece (201) and the second tube piece (203) each form a first circularly symmetrical support surface (209a); wherein
the first support surfaces (209a) are supported against one another at least in at least one radial direction;
the first tube piece (201) and the second tube piece (203) each form a second circularly symmetrical support surface (209b); wherein
the second support surfaces (209b) are supported against one another at least partially in at least one radial direction.

2. Pitch tube (101) according to Claim 1; **characterized in that**
a first region of the first tube piece (201) and a first region of the second tube piece (203) are arranged axially offset from one another.

3. Pitch tube (101) according to the preceding claim; **characterized in that**
a second region of the first tube piece (201) and a second region of the second tube piece (203) are releasably connected to one another.

4. Pitch tube (101) according to one of the preceding claims; **characterized in that**
the first tube piece (201) and the second tube piece (203) are screwed to one another.

5. Pitch tube (101) according to the preceding claim; **characterized in that**
the first tube piece (201) forms a first thread; wherein the second tube piece (203) forms a second thread (); wherein
the first thread and the second thread are screwed to one another.

6. Pitch tube (101) according to the preceding claim; **characterized in that**
the first thread and the second thread are oriented axially.

7. Pitch tube (101) according to Claim 3; **characterized in that**
the second region of the first tube piece (201) is arranged axially between the first support surface (209a) and the second support surface (209b) of the first tube piece (201); wherein
the second region of the second tube piece (203) is arranged axially between the first support surface (209a) and the second support surface (209b) of the second tube piece (203).

8. Pitch tube (101) according to the preceding claim; **characterized in that**
the first support surfaces (209a) and/or the second support surfaces (209b) are of cylindrical or conical form.

9. Gear mechanism having a pitch tube (101) according to one of Claims 1 to 8; **characterized in that** the first tube piece (201) is releasably connected to an input shaft (401) of the gear mechanism.

## Revendications

1. Tube de réglage de pas (101) comprenant une première pièce de tube (201) et une deuxième pièce de tube (203) ;
le tube de réglage de pas (101) comportant exactement deux embouchures ;
la première pièce de tube (201) et la deuxième pièce de tube (203) formant chacune l'une des embouchures ;
la première pièce de tube (201) et la deuxième pièce de tube (203) étant reliées l'une à l'autre de manière amovible ; **caractérisé en ce que**
la première pièce de tube (201) et la deuxième pièce de tube (203) forment chacune une première surface d'appui à symétrie de révolution (209a) ;
les premières surfaces d'appui (209a) venant en appui l'une contre l'autre au moins dans au moins une direction radiale,
la première pièce de tube (201) et la deuxième pièce de tube (203) forment chacune une deuxième surface d'appui (209b) à symétrie de révolution ;
les deuxièmes surfaces d'appui (209b) venant en appui l'une contre l'autre au moins partiellement dans au moins une direction radiale.

2. Tube de réglage de pas (101) selon la revendication 1, **caractérisé en ce que**
une première zone de la première pièce de tube (201) et une première zone de la deuxième pièce de tube (203) sont disposées de manière décalée axialement l'une par rapport à l'autre.

3. Tube de réglage de pas (101) selon la revendication précédente, **caractérisé en ce que**
une deuxième zone de la première pièce de tube (201) et une deuxième zone de la deuxième pièce de tube (203) sont reliées l'une à l'autre de manière amovible.

4. Tube de réglage de pas (101) selon l'une des revendications précédentes, **caractérisé en ce que**
la première pièce de tube (201) et la deuxième pièce de tube (203) sont vissées l'une à l'autre.

5. Tube de réglage de pas (101) selon la revendication précédente, **caractérisé en ce que**
la première pièce de tube (201) forme un premier filetage ;
la deuxième pièce de tube (203) forme un deuxième filetage () ;
le premier filetage et le deuxième filetage sont vissés l'un à l'autre.

6. Tube de réglage de pas (101) selon la revendication précédente, **caractérisé en ce que**
le premier filetage et le deuxième filetage sont alignés axialement.

7. Tube de réglage de pas (101) selon la revendication 3, **caractérisé en ce que**
la deuxième zone de la première pièce de tube (201) est disposée axialement entre la première surface d'appui (209a) et la deuxième surface d'appui (209b) de la première pièce de tube (201) ;
la deuxième zone de la deuxième pièce de tube (203) est disposée axialement entre la première surface d'appui (209a) et la deuxième surface d'appui (209b) de la deuxième pièce de tube (203).

8. Tube de réglage de pas (101) selon la revendication précédente, **caractérisé en ce que**
les premières surfaces d'appui (209a) et/ou les deuxièmes surfaces d'appui (209b) sont de forme cylindrique ou conique.

9. Transmission comprenant un tube de réglage de pas (101) selon l'une des revendications 1 à 8, **caractérisée en ce que**
la première pièce de tube (201) est reliée de manière amovible à un arbre d'entrée (401) de la transmission.
